# EUROPEAN PATENT SPECIFICATION

(11) **EP 0 815 652 B1**
(45) Date of publication and mention of the grant of the patent: **16.06.2004**
(21) Application number: 96938427.0
(22) Date of filing: 04.12.1996
(51) Int. Cl.: H04B 1/00

(54) **A RECEIVER FOR DETECTING ADJACENT CHANNEL INTERFERENCE**
EMPFÄNGER ZUR ERKENNUNG VON NACHBARKANALINTERFERENZEN
RECEPTEUR POUR DETECTER DES INTERFERENCES ENTRE CANAUX VOISINS

(30) Priority: 22.12.1995 EP 95203608
(43) Date of publication of application: 07.01.1998
(73) Proprietor: Koninklijke Philips Electronics N.V., 5621 BA Eindhoven (NL)
(72) Inventor: BIJKER, Wolter, NL-5656 AA Eindhoven (NL); KASPERKOVITZ, Wolfdietrich, Georg, NL-5656 AA Eindhoven (NL)
(74) Representative: Groenendaal, Antonius Wilhelmus Maria
(86) International application number: PCT/IB1996/001343
(87) International publication number: WO 1997/023959

(56) References cited:
- EP-A- 0 653 850
- GB-A- 2 231 218
- SU-A- 745 004
- SU-A- 809 592

## Description

The invention relates to a receiver comprising:
- receiving means for receiving an RF signal,
- means for demodulating phase/frequency information of the RF signal,
- means for demodulating amplitude information of the RF signal,
- detecting means coupled to the output of the means for demodulating phase/frequency information, the detecting means being arranged for receiving the phase/frequency information and for supplying an output signal, which is a measure of the adjacent channel interference in the RF signal.

The invention also relates to an arrangement for detecting adjacent channel interference, the arrangement being arranged for receiving phase/frequency information of an RF signal and supplying an output signal, which is a measure of the adjacent channel interference in the RF signal.
Such a receiver and arrangement are known from EP 0 653 850 A2. The receiver and arrangement described herein use only phase/frequency information for obtaining a measure of the adjacent channel interference. This is done a.o. by detecting spectral components having frequencies greater than 60 KHz in the phase/frequency information. As a result of this, it is not possible to detect adjacent channel interference having spectral components below 60 KHz. Furthermore, the information supplied by the detecting means in the known receiver only supplies information on the magnitude of the adjacent channel information, as practically only the adjacent channel interference will contribute to the DC component, no matter what its spectral content is.

An object of the invention is to provide an improved receiver and an improved arrangement for detecting adjacent channel interference.

A receiver in accordance with the invention is characterized in that the detecting means are further coupled to the output of the means for demodulating amplitude information, the detecting means being arranged for receiving the amplitude information and comprise multiplying means for multiplying the amplitude information with the phase/frequency information, the detecting means being arranged for deriving the output signal from an output signal of the multiplying means.
When a carrier is present in the neighbourhood of a desired carrier, this results in a beat note in both the phase/frequency information and the amplitude information of the received RF signal. This beat note will have the same frequency both in the amplitude information as in the phase/frequency information. However, only the phase/frequency information contains desired modulation, whereas the amplitude information does not but may contain harmonics of the spectral components of the modulation due to a limited bandwidth of the receiver. When multiplying the phase/frequency information with the amplitude information, the beat notes will produce a DC component at the output of the multiplier, whose magnitude is a measure of the relative strength of the adjacent carrier and whose sign indicates if the adjacent carrier has a higher frequency (positive sign) or a lower frequency (negative sign) than the desired carrier. However, the modulation components in the phase/frequency information and the amplitude information will not produce DC information, because they do not each comprise identical frequency components. This means that even spectral components of the adjacent channel interference below 60 KHz can be detected.

An embodiment of the receiver according to the invention is characterized in that the detecting means comprise low-pass filter means for filtering an output signal of the multiplying means.
Through this measure only the DC component containing information on the adjacent channel interference will be present, which simplifies the processing of the information in a later stage.

An embodiment of the receiver according to the invention is characterized in that the detecting means include rectifying means for supplying a rectified output signal as output signal of the detecting means.
In those cases where the location of the adjacent carrier is not important, the sign information in the output signal of the multiplying means can be suppressed by including rectifying means for rectifying the output signal of the detecting means.

An embodiment of the receiver according to the invention is characterized in that the detecting means comprise processing means for processing the amplitude information supplied to multiplying means. By processing the amplitude information before supplying it to the multiplying means allows a better distinction between adjacent channel interference and other signals present in the amplitude information, such as modulation residues etc.

An embodiment of the receiver according to the invention is characterized in that the processing means include high-pass filter means.
One example of such processing is using a high-pass filter to suppress low-frequency components, which can be caused by the modulation.

An embodiment of the receiver according to the invention is characterized in that the processing means include limiting means.
Insertion of limiting means in the path of the amplitude information makes the amplitude of the beat note applied to the second input independent of the ratio between the amplitudes of the desired carrier and the adjacent carrier. Thus the output signal of the multiplying means will be only proportional to this ratio, instead of being proportional to the square of this ratio.

An embodiment of the receiver according to the invention is characterized in that the processing means include a non-linear device.
In those receivers which comprise non-linear means for demodulating amplitude information, this non-linearity may result in distortion components appearing in the output of the multiplying means. By compensating for this non-linearity by inserting a non-linear device, having an inverse non-linearity, this can be compensated for.

An embodiment of the receiver according to the invention is characterized in that the detecting means comprise further high-pass filter means for processing the phase/frequency information supplied to the multiplying means.
Incorporation of further high-pass filter means for filtering the phase/frequency information supplied to the multiplying means, increases the purity of the output signal of the multiplying means in that less modulation components will be present in this output signal.

An embodiment of the receiver, comprising adjustable means for reducing adjacent channel interference, according to the invention is characterized in that the output of the detecting means is coupled to the adjustable means.
In this embodiment the adjacent channel interference information as present at the output of the detecting means is used advantageously to control the adjustable means in a way to reduce the adjacent channel interference. The adjustable means may for example comprise filter means in the receiving means, the bandwidth and/or tuning frequency of the filter means being adjustable, or tuning means, which can be de-tuned, or even audio processing means, wherein the audio volume or bandwidth can be adjustable.

The above object and features of the present invention will be more apparent from the following description of the preferred embodiments with reference to the drawings, wherein:
Figure 1 shows an embodiment of a receiver according to the invention,
Figure 2 shows an embodiment of an arrangement according to the invention. In the figures, identical parts are provided with the same reference numbers.

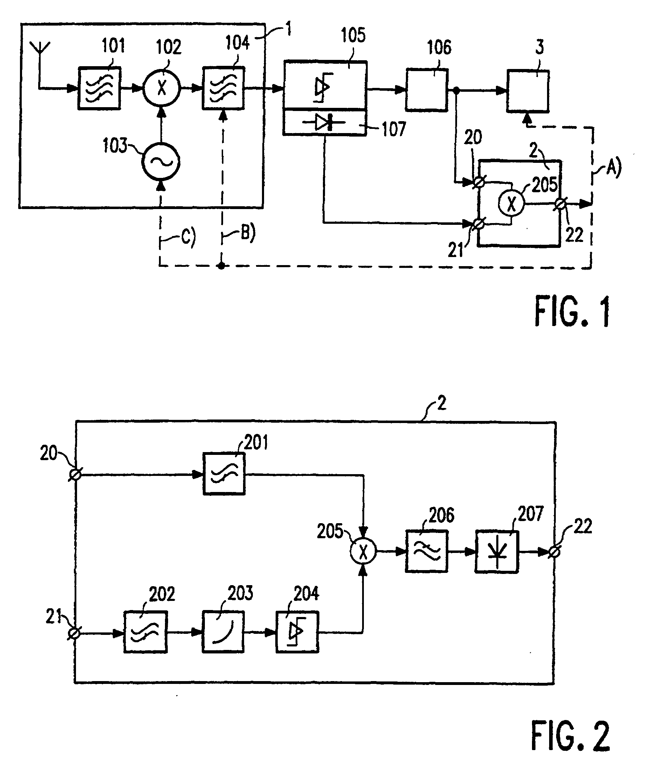

Figure 1 shows an embodiment of a receiver according to the invention. The receiver comprises:
- receiving means 1 for receiving an RF signal,
- amplifying/limiting means 105 coupled to the means for receiving an RF signal 1, the amplifying/limiting means incorporating means for demodulating amplitude information 107,
- means for demodulating phase/frequency information 106, coupled to the amplifying/limiting means 105.
The Philips TEA 6100 integrated circuit is an illustration of a circuit comprising all three means 105, 106 and 107, but is not the only possible solution to realizing these three means. It is also possible to realise the means for demodulating amplitude information 107 separately from the amplifying/limiting means 105. The means for receiving an RF signal 1 may comprise an input stage 101 coupled to a mixing stage 102, which in its turn is coupled to an IF filter stage 104, providing IF selectivity. The mixing stage 102 is also coupled to tuning means 103, which provides a signal with a variable frequency for tuning the receiver for receiving the desired RF signal. The tuning means 103 may incorporate a variable frequency oscillator, which can be tuned to a desired frequency. In the receiver shown, which is an FM receiver, an output of the means 106 is coupled to audio processing means 3 for further processing of the demodulated phase/frequency information. In an AM receiver (not shown), an output of the means for demodulating amplitude information 107 would be coupled to the audio processing means 3.

The receiver further comprises detecting means 2. The detecting means 2 are an arrangement for detecting adjacent channel interference. The detecting means 2 comprise a first input 20 for receiving the demodulated phase/frequency information, a second input 21 for receiving the amplitude information and an output for supplying an output signal, which is a measure of the adjacent channel interference. The detecting means 2 further comprise multiplying means 205 having a first input coupled to the first input 20 of the detecting means 2, a second input coupled to the second input 21 of the detecting means 2, and an output coupled to the output 22 of the detecting means 2. In the receiver, known from EP 0 653 850 A2, detecting means detect in the demodulated frequency information if spectral components above 60 KHz are present. This gives an indication that adjacent channel interference is present. However, this filtering of spectral components below 60 KHz does not allow the detection of adjacent channel interference having spectral components mainly below 60 KHz, which are caused by an adjacent carrier at a distance of less than 60 KHz. A reason for this 60 KHz limit is that the audio spectrum in the demodulated phase/frequency information usually runs up to 53 KHz, and close to 60 KHz if an FM signal comprises RDS information as well. This makes distinguishing between modulation and adjacent channel interference below 60 KHz difficult if not impossible. When the receiver receives a carrier at the desired frequency and an adjacent carrier is present at the same time, a beat note is produced in both the amplitude information and phase/frequency information. This beat note has a frequency equal to the difference in frequency between desired carrier and adjacent carrier, the amplitude of the beat note depending on a ratio A of the amplitudes of the carrier. If the carriers are of substantially equal magnitude (ratio A ≈ 1), the amplitude of the beat note is maximal. If one of the carrier amplitudes is relatively small compared to the other carrier amplitude (ratio A < < 1 or A > > 1), then the amplitude of the beat note will be small as well. When the amplitude information and the phase/frequency are multiplied, this results in a DC component at the output of the multiplying means 205, caused by the beat notes being converted down to DC by the multiplication. The sign of the DC component indicates if the adjacent carrier has a larger frequency (positive sign) or a smaller frequency (negative sign) than the desired carrier. The magnitude of the DC component is a function of the amplitude ratio of the two carriers.

In an FM receiver only the phase/frequency information comprises modulation. The amplitude information, however, may comprise harmonics of the modulation in the case that at large frequency excursions the desired carrier is in a slope of the filter characteristic of the IF filter stage 104. In an AM receiver only the amplitude information comprises modulation, but now the phase/frequency information may comprise harmonics of the modulation due to imperfections in the receiver. In general, due to the fact that only one of the two signals provided to the detecting means 2 contains modulation and the other signal only harmonics of the modulation, a multiplication of the two signals will result in hardly any DC components at the output of the multiplying means 205, which DC components are caused by the modulation. Thus, even though no filtering of the signals supplied to the detecting means 2 has taken place, the adjacent channel interference information can be retrieved at the output of the detecting means 2 without much contamination caused by the modulation. This means that even spectral components in the adjacent channel interference, having frequencies lower than 60 KHz can be detected accurately, as practically only the adjacent channel interference will result in a DC component at the output of the multiplying means 205. Furthermore, the output signal of the detecting means 2 does not only provide information on the strength of the adjacent channel information, but also whether the adjacent carrier causing the interference is located at a higher or lower frequency than the desired carrier, to which desired carrier the receiver is tuned.

This information can then be used to control adjustable means for reducing adjacent channel interference. These adjustable means can be incorporated in the audio processing means 3 (dashed line having reference A) in Figure 1) or may comprise the IF filter stage 104 (dashed line having reference B) in Figure 1) or the tuning means 103 (dashed line having reference C) in Figure 1). In one way, indicated by the dashed line with reference A), the information provided by the detecting means 2 can be used to control the audio processing means 3 in such a way as to reduce the audible interference, for example by decreasing the audio bandwidth or by reducing the volume level or similar measures. In this situation only the magnitude of the information is used, but not the sign of the output signal. In another way, indicated by the dashed line with reference B), the IF filter stage 104 is controlled in such a way that the adjacent carrier is suppressed more. This can be done by decreasing the IF filter bandwidth in response to the output signal of the detecting means 2. Again the sign of the information is not used for the bandwidth control. Another possibility is to detune the IF filter away from the adjacent carrier, i.e. shifting the central frequency of the IF filter away from the frequency of the adjacent carrier. Thus, the adjacent carrier is effectively "pushed" further into the slope of the filter characteristic of the IF filter stage 104, thereby undergoing extra attenuation. Both measures result in a decrease in amplitude of the adjacent carrier, thereby effectively reducing the adjacent channel interference. Now the sign is used for steering the central frequency of the IF filter stage 104 in the correct direction (to a higher frequency when the adjacent carrier has a lower frequency and vice versa). An example of an IF filter, having a controllable bandwidth and/or a controllable tuning frequency, can be found in US patent 5,220,686. Yet another way of using the information supplied by the detecting means 2 is to change the tuning frequency in the same manner as the central frequency of the IF filter in the previous example. This is illustrated with the dashed line having reference C). In this case, again use is made of the sign information in the output signal of the detecting means 2 for steering the tuning frequency in the correct direction, away from the adjacent carrier. Detuning of the tuning means 103 is in effect similar to detuning of the tuning frequency of the IF filter stage 104, as in both cases the adjacent carrier is effectively "pushed" further into the slope of the filter characteristic, as explained previously. Both these measures could heretofore not be realised with the existing detecting means, as these detecting means did not provide information on the whereabouts of the adjacent carrier. Another advantage of the detecting means according to the invention is that a better discrimination between adjacent channel interference information and other signals is achieved.

Figure 2 shows an embodiment of an arrangement according to the invention. The detection means 2, which may also be called an arrangement for detecting adjacent channel interference, may comprise processing means for processing the amplitude information supplied to the multiplying means. These processing means may comprise high-pass filter means 202, a non-linear device 203, and limiting means 204, coupled in series between input 21 and the second input of the multiplying means 205. It is not necessary to include all of these blocks or specifically in this order. Each of these blocks may be included individually or in combination with one or more of the other blocks in the arrangement 2. It is also possible to include further processing means for processing of the phase/frequency information. In Figure 2 an example of such further processing means is given in the shape of further high-pass filter means 201 being coupled between input 21 and the first input of the multiplying means 205. High-pass filter means 201 serve the purpose of suppressing low-frequency components in the phase/frequency information, which are most likely not the result of adjacent channel interference. In an FM receiver, these low-frequency components mainly comprise audio information. Suppression thereof will lead to an output signal of the multiplying means comprising less audio residues and thus will lead to relatively "purer" information on the adjacent channel interference. In an AM receiver the low-frequency components may comprise audio residues, caused by AM to PM conversion due to imperfections of the receiver. Again it is sensible to suppress these low-frequency components. High-pass filter means 202 serve a similar purpose, namely to suppress low-frequency components, which hardly comprise spectral components of the adjacent channel interference. Of course, both filter means may be applied in the same detecting means 2. The roll-off of the filter characteristic of either filter means 201 or 202 need not be as steep so as to remove the total modulation from the signal supplied to the multiplying means 205, as the detecting means 2 inherently already makes a selection between adjacent channel interference (which is converted to DC) and other components (which are not converted to DC). Thus, even now it is possible to detect adjacent channel interference which has spectral components below 60 KHz and even below the cut-off frequency of the high-pass filter means. The non-linear device 203 can be used for compensating any non-linearities in the means for demodulating amplitude information 107. For example, the TEA6100 has means 107, which have a logarithmic distortion. By adding non-linear device 203 having an inverse (in this case exponential) distortion, the distortion of the non-linear means 107 can be compensated for. This results in less harmonics at the output of the multiplying means and thus again a "purer" or less contaminated output signal. Limiting means 204 serve the purpose of keeping the beat note caused by the adjacent channel interference at a fixed amplitude. Thus, the resulting DC component at the output of the multiplying means 205 is now only proportional to the ratio A and no longer proportional to the square of ratio A. This may be an attractive feature for control purposes. It is also possible to include limiting means before the first input of the multiplying means 205 and not include limiting means 204. However, in this case the modulation in the phase/frequency information should be suppressed more as the limiting means will limit the total signal: beat note and modulation, which is not desirable. In an AM receiver it would be advisable to include the limiting means in the path of the phase/frequency information instead of the path of the amplitude information. In Figure 1 the output signal of the detecting means 2 is directly derived from the output signal of the multiplying means 205. In Figure 2 the output signal of the detecting means or arrangement 2 is derived indirectly from the output signal of the multiplying means 205. The arrangement 2 as shown in Figure 2 comprises low-pass filter means 206, coupled between an output of the multiplying means 205 and the output 22. This provides a simple selection of the desired DC component and removes other components, which do not contribute to the information on the adjacent channel interference. Rectifying means 207 may be provided, coupled between an output of the low-pass filter means 206 and output 22, for those situations in which no use is made of the sign information in the output signal of the detecting means 2. If desired, the rectifying means 207 may be followed by additional low-pass filter means (not shown). This is however not essential. In either the phase/frequency information path or the amplitude information path means may be provided for matching the phases of the beat notes in order to obtain a maximal value of the DC component.

The embodiments shown are merely given as an illustration of the invention and by no means are intended to delimit the invention. For example, the sequence of blocks 202, 203 and 204 is preferably as shown in Figure 2, but not a strict requirement. Furthermore, the receiving means 1 can be implemented in many ways and its construction is not material to the present invention. The various blocks in the Figures can be implemented with discrete or integrated components, but can also implemented digitally, for example in a digital signal processor.

## Claims

1. A receiver comprising:
- receiving means (1) for receiving an RF signal,
- means (106) for demodulating phase/frequency information of the RF signal,
- means (107) for demodulating amplitude information of the RF signal,
- detecting means (2) coupled to the output of the means (106) for demodulating phase/frequency information, the detecting means (2) being arranged for receiving the phase/frequency information (20) and for supplying an output signal (22), which is a measure of the adjacent channel interference in the RF signal,
**characterized in that** the detecting means (2) are further coupled to the output of the means (107) for demodulating amplitude information, the detecting means (107) being arranged for receiving the amplitude information (21) and comprise multiplying means (205) for multiplying the amplitude information (21) with the phase/frequency information (20), the detecting means (2) being arranged for deriving the output signal (22) from an output signal of the multiplying means (205).

2. The receiver of Claim 1, **characterized in that** the detecting means (2) comprise low-pass filter means (206) for filtering an output signal of the multiplying means (205).

3. The receiver of Claim 1 or 2, **characterized in that** the detecting means (2) include rectifying means (207) for supplying a rectified output signal as output signal of the detecting means (2).

4. The receiver of Claim 1, 2 or 3, **characterized in that** the detecting means (2) comprise processing means for processing the amplitude information (21) supplied to multiplying means (205).

5. The receiver of Claim 4, **characterized in that** the processing means include high-pass filter means (202).

6. The receiver of Claim 4 or 5, **characterized in that** the processing means include limiting means (204).

7. The receiver of Claim 4, 5 or 6, **characterized in that** the processing means include a non-linear device (203).

8. The receiver of Claim 1, 2, 3, 4, 5, 6 or 7, **characterized in that** the detecting means (2) comprise further high-pass filter means (201) for processing the phase/frequency information (20) supplied to the multiplying means (205).

9. The receiver of Claim 1, 2, 3, 4, 5, 6, 7 or 8, comprising adjustable means (3, 104, 103) for reducing adjacent channel interference, **characterized in that** the output (A, B, C) of the detecting means (2) is coupled to the adjustable means (3, 104, 103).

## Patentansprüche

1. Empfänger, der die nachfolgende Elemente umfasst:
- Empfangsmittel (1) zum Empfangen eines HF-Signals,
- Mittel (106) zum Demodulieren von Phasen/Frequenzinformation des HF-Signals,
- Mittel (107) zum Demodulieren von Amplitudeninformation des HF-Signals,
- Detektionsmittel (2), die mit dem Ausgang der Mittel (106) zum Demodulieren von Phasen/Frequenzinformation gekoppelt sind, wobei die Detektionsmittel (2) vorgesehen sind zum Empfangen der Phasen/Frequenzinformation (20) und zum Liefern eines Ausgangssignals (22), das ein Maß der Nachbarkanalinterferenz in dem HF-Signal ist,
**dadurch gekennzeichnet, dass** die Detektionsmittel (2) weiterhin mit dem Ausgang der Mittel (107) zum Demodulieren von Amplitudeninformation gekoppelt sind, wobei die Detektionsmittel (107) dazu vorgesehen sind, die Amplitudeninformation (21) zu empfangen und Multipliziermittel (205) aufweisen zum Multiplizieren der Amplitudeninformation (21) mit der Phasen/Frequenzinformation (20), wobei die Detektionsmittel (2) vorgesehen sind zum Herleiten des Ausgangssignals (22) von einem Ausgangssignal der Multipliziermittel (205).

2. Empfänger nach Anspruch 1, **dadurch gekennzeichnet, dass** die Detektionsmittel (2) Tiefpassfiltermittel (206) aufweisen zum Filtern eines Ausgangssignals der Multipliziermittel (205).

3. Empfänger nach Anspruch 1 oder 2, **dadurch gekennzeichnet, dass** die Detektionsmittel (2) Gleichrichtermittel (207) aufweisen zum Liefern eines gleichgerichteten Ausgangssignals der Detektionsmittel (2).

4. Empfänger nach Anspruch 1, 2 oder 3, **dadurch gekennzeichnet, dass** die Detektionsmittel (2) Verarbeitungsmittel enthalten zum Verarbeiten der Amplitudeninformation (21), die den Multipliziermitteln (205) zugeführt werden.

5. Empfänger nach Anspruch 4, **dadurch gekennzeichnet, dass** die Verarbeitungsmittel Hochpassfiltermittel (202) aufweisen.

6. Empfänger nach Anspruch 4 oder 5, **dadurch gekennzeichnet, dass** die Verarbeitungsmittel Begrenzungsmittel (204) aufweisen.

7. Empfänger nach Anspruch 4, 5 oder 6, **dadurch gekennzeichnet, dass** die Verarbeitungsmittel eine nicht lineare Anordnung (203) aufweisen.

8. Empfänger nach Anspruch 1, 2, 3, 4, 5, 6 oder 7, **dadurch gekennzeichnet, dass** die Detektionsmittel (2) weitere Hochpassfiltermittel (201) aufweisen zum Verarbeiten der Phasen/Frequenzinformation (20), die den Multipliziermitteln (205) zugeführt werden.

9. Empfänger nach Anspruch 1, 2, 3, 4, 5, 6, 7 oder 8, mit einstellbaren Mitteln (3, 104, 103) zum Reduzieren von Nachbarkanalinterferenz, **dadurch gekennzeichnet, dass** der Ausgang (A, B, C) der Detektionsmittel (2) mit den einstellbaren Mitteln (3, 104,-103) gekoppelt ist.

## Revendications

1. Récepteur comprenant:
- des moyens de réception (1) pour recevoir un signal RF,
- des moyens (106) pour démoduler des informations de phase/fréquence du signal RF,
- des moyens (107) pour démoduler des informations d'amplitude du signal RF,
- des moyens de détection (2) qui sont couplés à la sortie des moyens (106) pour démoduler des informations de phase/fréquence, les moyens de détection (2) étant agencés de manière à recevoir les informations de phase/fréquence (20) et à appliquer un signal de sortie (22), ce qui est une mesure des interférences de canaux voisins dans le signal RF,
**caractérisé en ce que** les moyens de détection (2) sont encore couplés à la sortie des moyens (107) pour démoduler des informations d'amplitude, les moyens de détection (107) étant agencés de manière à recevoir les informations d'amplitude (21), et comprennent des moyens de multiplication (205) pour multiplier les informations d'amplitude (21) par les informations de phase/fréquence (20), les moyens de détection (2) étant agencés de manière à dériver le signal de sortie (22) à partir d'un signal de sortie des moyens de multiplication (205).

2. Récepteur selon la revendication 1, **caractérisé en ce que** les moyens de détection (2) comprennent des moyens de filtre passe-bas (206) pour filtrer un signal de sortie des moyens de multiplication (205).

3. Récepteur selon la revendication 1 ou 2, **caractérisé en ce que** les moyens de détection (2) comprennent des moyens de redressement (207) pour appliquer un signal de sortie redressé en tant que signal de sortie des moyens de détection (2).

4. Récepteur selon la revendication 1, 2 ou 3, **caractérisé en ce que** les moyens de détection (2) comprennent des moyens de traitement pour traiter les informations d'amplitude (21) qui sont fournies aux moyens de multiplication (205).

5. Récepteur selon la revendication 4, **caractérisé en ce que** les moyens de traitement comprennent des moyens de filtre passe-haut (202).

6. Récepteur selon la revendication 4 ou 5, **caractérisé en ce que** les moyens de traitement comprennent des moyens de limitation (204).

7. Récepteur selon la revendication 4, 5 ou 6, **caractérisé en ce que** les moyens de traitement comprennent un dispositif non linéaire (203).

8. Récepteur selon la revendication 1, 2, 3, 4, 5, 6 ou 7, **caractérisé en ce que** les moyens de détection (2) comprennent de nouveaux autres moyens de filtre passe-haut (201) pour traiter les informations de phase/fréquence (20) qui sont fournies aux moyens de multiplication (205).

9. Récepteur selon la revendication 1, 2, 3, 4, 5, 6, 7 ou 8, comprenant des moyens réglables (3, 104, 103) pour réduire des interférences de canaux voisins, **caractérisé en ce que** la sortie (A, B, C) des moyens de détection (2) est couplée aux moyens réglables (3, 104, 103).
